# FASCICULE DE BREVET EUROPEEN

(11) **EP 1 319 586 B1**
(45) Date de publication et mention de la délivrance du brevet: **24.01.2007**
(21) Numéro de dépôt: 02293024.2
(22) Date de dépôt: 06.12.2002
(51) Int. Cl.: B62D 43/04

(54) **Dispositif de fixation d'une roue de secours sous le plancher d'un véhicule**
Unterbodenbefestigung für ein Kraftfahrzeugersatzrad
Underfloor fixation for a spare wheel of a vehicle

(30) Priorité: 11.12.2001 FR 0115986
(43) Date de publication de la demande: 18.06.2003
(73) Titulaire: Renault s.a.s., 92100 Boulogne Billancourt (FR)
(72) Inventeur: Bellot, Thierry, 78670 Medan (FR); Delpuech, Patrick, 78470 Saint Remy Les Chevreuses (FR); Vincent, Philippe, 92500 Rueil Malmaison (FR); Berthier, Dominique, 78150 Rocquencourt (FR); Fernandez Mateo, José, 78120 Rambouillet (FR)

(56) Documents cités:
- EP-A- 0 477 095
- EP-A- 1 076 001
- DE-A- 4 300 554
- US-A- 4 377 366
- US-A- 5 669 534
- US-B1- 6 276 889

## Description

La présente invention concerne un dispositif de fixation d'une roue de secours sous le plancher d'un véhicule automobile et concerne également un véhicule automobile équipé d'un tel dispositif de fixation.

Par la demande de brevet n° 00 12096 déposée par la Demanderesse, on connaît un dispositif de fixation de ce type, qui comprend un treuil logé dans un bac cylindrique qui est fixé sous le plancher du véhicule dans une ouverture percée dans ledit plancher. Ledit bac a un diamètre et une hauteur respectivement inférieures à ceux du creux de la jante de la roue de secours et présente en son fond une ouverture centrale à travers laquelle passe le câble du treuil. L'extrémité du câble est munie de moyens de préhension destinés à accrocher la roue de secours par le bord du trou de moyeu. Lorsque le treuil est actionné, la roue est soulevée jusqu'à venir en contact avec le plancher. Le bac est alors logé à l'intérieur du creux de la jante.

Ce dispositif de fixation fonctionne correctement, mais il présente un certain nombre d'inconvénients :
- l'opération de fixation du bac sous le plancher ralentit l'avancée du véhicule dans la chaîne de montage. Il est certes possible de réduire le temps de cycle qui est imparti pour la fixation de la roue de secours, en effectuant les opérations de préassemblage de la roue de secours au bac en dehors de la chaîne de montage, mais il restera encore à fixer l'ensemble du bac et de la roue de secours dans l'ouverture du plancher ;
- le treuil et son système de démultiplication sont des composants coûteux qui grèvent le prix de revient du véhicule ;
- les opérations de remontée et de descente de la roue de secours sont relativement longues et fatigantes parce qu'il faut actionner une manivelle pour entraîner le treuil.

La présente invention a pour but de remédier à ces inconvénients et propose donc un dispositif de fixation d'une roue de secours sous le plancher d'un véhicule automobile, qui n'utilise pas de treuil et qui est donc plus économique que le dispositif décrit ci-dessus.

L'invention concerne également un dispositif de fixation qui ne nécessite pas de préassemblage d'éléments en dehors de la chaîne de montage et qui n'introduit pas de retard dans l'avancée du véhicule vers le poste suivant.

L'invention concerne encore un dispositif de fixation qui ne nécessite pas de grands efforts pour sa mise en oeuvre et qui peut donc être utilisé même par des personnes faibles ou âgées.

On obtient tous ces avantages avec le dispositif de fixation de roue de secours sous le plancher d'un véhicule automobile selon l'invention, qui se caractérise en ce qu'il comprend :
- un bac agencé dans le plancher du véhicule et comportant en son fond une ouverture centrale,
- des moyens supports de roue destinés à soutenir la roue de secours par son centre, pendant son levage,
- des moyens de levage comprenant un câble fixé par une extrémité sur lesdits moyens supports et par l'autre extrémité à une poignée de traction,
- des moyens de préverrouillage destinés à maintenir provisoirement la roue de secours en position soulevée, avec sa jante contre le fond du bac, sans le moyen du câble,
- et des moyens de verrouillage pour verrouiller définitivement la roue de secours en position de fixation, où le pneumatique de la roue est appliqué contre la face extérieure du plancher.

Avantageusement, les moyens de levage comprennent également une barre de renvoi de mouvement qui, en utilisation, est fixée de façon amovible ou fixe sur le bord supérieur du bac, selon une direction diamétrale, pour servir d'appui au câble pendant l'opération de levage.

Ainsi, le treuil de la technique antérieure est remplacé par un dispositif de levage manuel simple et économique. Ce dispositif ne nécessite que peu d'effort pour l'actionner, puisque le poids de la roue de secours est essentiellement porté par la barre de renvoi de mouvement.

Selon un premier mode de réalisation de l'invention, les moyens supports de roue comprennent un élément support et un élément de serrage destinés à être placés respectivement du côté extérieur de la jante de la roue et du côté du creux de la jante, en position centrée sur le trou de moyeu de la roue et qui peuvent être assemblés l'un à l'autre par vissage en serrant entre eux le bord du trou de moyeu, le câble étant fixé sur l'élément de serrage.

Les moyens de préverrouillage peuvent être constitués par un clip déformable élastiquement qui est fixé sur l'élément de serrage, ledit clip ayant une forme normale dans laquelle sa largeur est supérieure au diamètre de l'ouverture du fond du bac et une forme contractée pour laquelle sa largeur est inférieure au diamètre de ladite ouverture, de sorte qu'il peut s'encliqueter sur le bord de ladite ouverture lorsque la roue de secours est appliquée contre le plancher du véhicule, empêchant ainsi la chute de la roue de secours, même si l'on n'exerce pas de traction sur le câble de levage.

Les moyens de verrouillage sont constitués par une plaquette rectangulaire de longueur supérieure au diamètre de l'ouverture du fond du bac et qui est disposée sur le fond du bac, selon un diamètre de l'ouverture du fond du bac, de manière que ses extrémités reposent sur le bord de l'ouverture, ladite plaquette étant percée d'un trou pour le passage d'un boulon qui vient se visser dans un trou fileté formé dans l'élément de serrage, de sorte que lorsqu'on visse le boulon, la roue de secours remonte et s'applique contre le plancher du véhicule, tandis que le clip se dégage du bord de l'ouverture du bac.

Le mode de réalisation qui vient d'être décrit a l'inconvénient que les différentes pièces du dispositif de fixation sont indépendantes les unes des autres, et de ce fait, ces pièces risquent de s'égarer au cours des opérations de remplacement d'une roue crevée par une roue de secours.

Selon un second mode de réalisation de l'invention; on élimine ce risque en rendant toutes ces pièces solidaires les unes des autres, de façon à former un ensemble imperdable. Pour cela, le dispositif de fixation selon ce mode de réalisation se caractérise en ce que :
- l'élément support est constitué d'un corps cylindrique pourvu à une extrémité d'une portion filetée et portant à son autre extrémité une pièce de retenue montée pivotante entre une position de stockage où elle est repliée le long du corps, le corps et la pièce de retenue pouvant alors passer à travers le trou de moyeu de la roue de secours et une position déployée pour laquelle seul le corps cylindrique peut passer à travers le trou de moyeu,
- l'élément de serrage est constitué par un écrou dimensionné pour qu'il ne puisse pas sortir à travers l'ouverture du fond du bac, et qui peut être assemblé, de l'intérieur du bac, sur la portion filetée de l'élément support après que le corps cylindrique a été passé à travers le trou de moyeu et l'ouverture du fond du bac,
- le câble est enfilé dans ledit écrou et ses extrémités sont fixées respectivement à l'extrémité filetée de l'élément support et à la poignée de traction,
- la poignée de traction se trouve dans le bac et est dimensionnée pour qu'elle ne puisse pas sortir à travers l'ouverture du fond du bac.

Grâce à ces caractéristiques, tous les composants du dispositif de fixation sont reliés au bac et ne peuvent être séparés l'un de l'autre.

Dans ce mode de réalisation, les moyens de préverrouillage sont constitués par la combinaison des caractéristiques suivantes :
- une gorge circulaire est formée sur le corps cylindrique de l'élément support ;
- ledit corps cylindrique à un diamètre supérieur à celui de la portion filetée et se raccorde à celle-ci par une portion conique,
- deux tiges parallèles sont fixées par une de leurs extrémités sur le fond du bac, de manière à pouvoir être écartées élastiquement, lesdites tiges passant en travers de l'ouverture du fond du bac, près du bord de cette ouverture et étant séparées par une distance égale au diamètre du fond de ladite gorge circulaire.

Ainsi, lorsque la roue est soulevée au moyen du câble, lesdites tiges sont écartées de leur position normale par ladite portion tronconique pour laisser passer le corps cylindrique de l'élément support et, lorsque la gorge arrive à leur niveau, les tiges s'y encliquettent, retenant ainsi la roue en position soulevée, de sorte que l'on peut relâcher la traction sur le câble. On a alors les deux mains libres pour serrer l'écrou sur la portion filetée de l'élément support.

L'invention concerne également un véhicule automobile équipé du dispositif de fixation de la roue de secours décrit ci-dessus.

D'autres avantages et caractéristiques de l'invention apparaîtront à la lecture de la description qui va suivre, faite en regard des dessins annexés dans lesquels :
la figure 1 est une vue en perspective éclatée du dispositif de verrouillage selon un premier mode de réalisation de l'invention ;
la figure 2 est une vue en coupe transversale agrandie d'un détail de la figure 1 montrant l'élément de serrage muni du clip ;
la figure 3 est une vue en perspective de l'un des blocs supports du clip ;
la figure 4 est une vue en plan montrant le dispositif de verrouillage et le clip en position rabattue sur le fond du bac ;
les figures 5 à 7 sont des vues en coupe transversale montrant trois phases successives du montage de la roue de secours ;
la figure 8 est une vue en perspective éclatée du dispositif de verrouillage selon un second mode de réalisation de l'invention ;
la figure 9 est une vue en coupe transversale montrant la roue de secours en position fixée sur le plancher au moyen du dispositif de fixation de la figure 8 ;
la figure 10 est une vue partielle en plan du fond du bac de la figure 8 ; et
la figure 11 est une vue en élévation de la poignée de traction à laquelle est intégré un dispositif servant à bloquer en rotation l'élément support pendant que l'on desserre à la main l'élément de serrage.

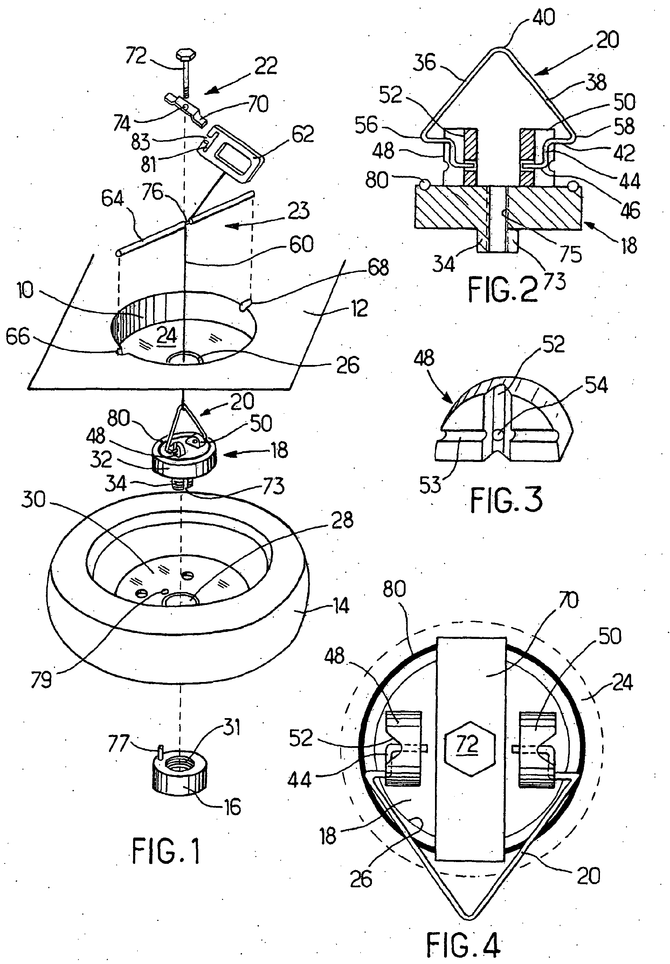

On décrira à présent le premier mode de réalisation du dispositif de fixation de l'invention en regard des figures 1 à 4.

Comme le montre la figure 1, le dispositif de fixation comprend un bac 10 agencé dans le plancher 12 du véhicule automobile, un élément support 16 servant à soutenir une de roue de secours 14, pendant son levage, un élément de serrage 18, un clip de préverrouillage 20, un dispositif de verrouillage 22 pour verrouiller la roue de secours en position fixée, et un dispositif de levage 23 pour soulever la roue de secours.

Le bac est de préférence formé en emboutissant le plancher vers l'extérieur du véhicule, mais il peut être également réalisé séparément, puis fixé dans une ouverture percée dans le plancher. Dans ce cas, la fixation du bac se fera de préférence en le vissant de l'intérieur du véhicule.

Le bac a une forme sensiblement cylindrique, de dimensions inférieures au creux de la jante 30 de la roue de secours 14 et il comporte un fond 24 percé d'une ouverture centrale 26.

L'élément support 16 est constitué par un écrou de diamètre supérieur à celui du trou de moyeu 28 et pourvue en son centre d'un alésage fileté 31.

L'élément de serrage 18 comprend une tête cylindrique 32 de diamètre supérieur à celui du trou de moyeu 28 et à celui de l'ouverture 26 du fond du bac, et une portion tubulaire 34, filetée extérieurement et intérieurement, de diamètre inférieur à celui du trou de moyeu.

L'élément support 16 se place sous la roue de secours en position centrée sur le trou de moyeu, tandis que l'élément de serrage se place à l'intérieur du creux de la jante en position centrée sur le trou de moyeu, et sa tige tubulaire filetée 34 passe à travers ce dernier. L'élément support et l'élément de serrage sont solidarisés par vissage, et serrent entre eux le bord du trou de moyeu. Il va de soi que les positions de la portion filetée 34 et de l'alésage 31 peuvent être inversées sur l'élément support 16 et sur l'élément de serrage 18.

On décrira à présent un mode de réalisation du clip de préverrouillage 20, étant entendu qu'il peut être réalisé de plusieurs autres façons.

Le clip 20 est constitué d'un fil métallique élastique plié en forme de triangle ouvert. Il comprend deux bras 36, 38 reliés par un coude 40, lesdits bras se prolongeant par des portions en Z symétriques l'une de l'autre par rapport à la bissectrice de l'angle formé par les côtés 36, 38. Chaque portion en Z comprend un premier tronçon 42 plié à angle aigu par rapport au bras adjacent 36 ou 38 et perpendiculaire à ladite bissectrice, un second tronçon 44 plié à 90° par rapport au premier tronçon dans le sens opposé au coude 40 et un troisième tronçon 46 plié à 90° par rapport au deuxième tronçon vers la bissectrice.

Le clip 20 est monté pivotant dans deux blocs supports 48, 50 fixés sur la face supérieure de l'élément de serrage 18 en des positions diamétralement opposées. Les blocs sont en forme de demi-cylindres et sont fixés sur l'élément de serrage par leur base rectangulaire parallèlement entre eux. Sur leurs faces extérieures sont formées une rainure radiale 52 de section en V, parallèle à l'axe de l'élément de serrage et une rainure 53 perpendiculaire à l'axe de l'élément de serrage. Dans le fond de la rainure est percé un trou traversant 54. Les deux trous traversants 54 formés dans les blocs 48, 50 reçoivent les troisièmes tronçons 46 du clip.

Comme le montre la figure 2, lorsque le clip est accroché sur les blocs en position dressée et qu'il n'est soumis à aucune contrainte, les deuxièmes tronçons 44 remontent le long des rainures 52 sans s'appuyer sur le fond des rainures et les coudes 56, 58 formés respectivement par les côtés 36, 38 et les premiers tronçons 42 font saillie par rapport aux faces plates extérieures des blocs.

Comme le montre la figure 4, le clip 20 peut occuper également une seconde position où il est rabattu contre le fond 24 du bac. Dans cette position, le clip est dilaté par le fait que les parois des rainures 52 en V, agissant comme des surfaces de came, écartent les seconds tronçons 44. Ces derniers sont alors reçus dans les rainures 53. On expliquera par la suite le rôle que le clip remplit dans chacune de ces positions.

Le dispositif de levage 23 comprend un câble 60 dont les extrémités sont fixées respectivement sur le coude 40 du clip et sur une poignée de traction 62. Le câble prend appui sur une barre de renvoi de mouvement 64 qui peut être fixée de façon amovible dans deux encoches 66, 68 diamétralement opposées formées sur le bord de l'ouverture supérieure du bac.

Le dispositif de verrouillage 22 comprend une plaquette 70 de forme rectangulaire ayant une longueur supérieure au diamètre de l'ouverture 26 du fond du bac, et un boulon 72 dont la tige filetée traverse un trou 74 formé au milieu de la longueur de la plaquette. Cette tige filetée vient se visser dans un alésage fileté 75 (figure 2) formé au centre de l'élément de serrage 18.

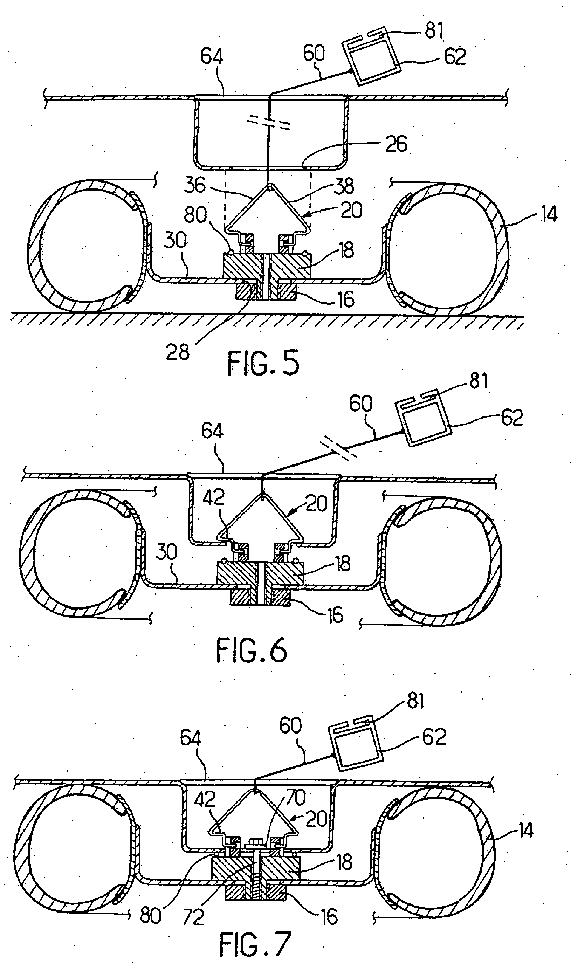

On décrira à présent le mode opératoire du montage de la roue de secours en se reportant aux figures 5 à 7.

On commence par assembler par vissage l'élément support 16 et l'élément de serrage 18 en les disposant de part et d'autre de la jante 30 de la roue, en position centrée sur le trou de moyeu 28, jusqu'à ce qu'ils serrent entre eux le bord dudit trou. La roue de secours est ensuite posée sur le sol et le clip 20 est amené dans sa position dressée.

Ensuite, on met en place la barre de renvoi 64 dans les encoches 66, 68 formées sur le bord supérieur du bac, puis on fait passer la poignée de traction 62 à travers l'ouverture 26 du bac, puis autour de la barre de renvoi de mouvement 64 de manière que le câble 60, s'appuie sur celle-ci, au milieu de sa longueur. La roue de secours et le dispositif de fixation sont alors dans l'état représenté sur la figure 5.

On exerce ensuite une traction sur la poignée 62 afin de soulever la roue de secours, le câble s'appuyant sur le point milieu de la barre de renvoi, par exemple dans une gorge 76 formée en ce point. Grâce à la barre de renvoi, l'utilisateur peut exercer la traction dans la direction la mieux adaptée à sa taille et à la position qu'il occupe par rapport au bac 10.

On notera qu'il n'est pas nécessaire de poser la roue de secours exactement à l'aplomb du bac, car même si elle est décalée, elle se centre automatiquement sur l'axe du bac dès qu'elle est suspendue en l'air, du fait que le point d'appui du câble sur la barre de renvoi de mouvement 64 se trouve exactement dans l'axe du trou 26 du bac.

Au cours du mouvement de remontée, au moment où les coudes 56, 58 du clip arrivent au niveau de l'ouverture 26 du fond du bac, le bord de ladite ouverture, agissant comme une surface de came sur les bras inclinés 36, 38 du clip, contractent ce dernier, cette contraction étant possible du fait que, comme le montre la figure 2, les seconds tronçons 44 du clip sont à une certaine distance du fond des rainures 52. Après que les coudes 56, 58 ont traversé le bord de l'ouverture 26, le clip reprend élastiquement sa forme dilatée, ce que l'utilisateur perçoit lorsqu'il entend un bruit sec.

A ce moment, l'utilisateur peut relâcher la traction qu'il exerce sur la poignée 62, sans risque que le roue de secours tombe. Celle-ci redescend seulement très légèrement jusqu'à ce que les tronçons horizontaux 42 du clip viennent s'appuyer sur le bord de l'ouverture 26. La roue de secours est alors dans la position préverrouillée représentée à la figure 6.

On notera que le clip ne peut plus se contracter, car il faudrait pour cela exercer des forces antagonistes énormes sur ses deux bras 36, 38 pour vaincre les forces de frottement des premiers tronçons 42 sur le bord de l'ouverture 26. De plus, même si l'on voulait soulager le clip en le rabattant contre le fond du bac, on ne pourrait encore pas le contracter, car sous le poids de la roue de secours, le clip serait rappelé brusquement à sa position dressée.

La dernière opération consiste à mettre en place le dispositif de verrouillage. Pour cela, la plaquette de verrouillage 70 est placée sur le fond du bac dans une position diamétrale de l'ouverture 26, croisée par rapport à celle des blocs supports 48, 50, ses extrémités s'appuyant sur le bord de ladite ouverture et son trou 74 étant centré sur l'alésage 75 de l'élément de serrage 18. On visse ensuite le boulon 72 au moyen d'une clé à six pans. Du fait que la plaquette s'arqueboute par ses extrémités sur le bord de l'ouverture 26, c'est l'ensemble de la roue de secours 14, de l'élément support 16 et de l'élément de serrage 18 qui remonte jusqu'à ce que la roue s'applique contre le plancher. Dans cette position, les tronçons horizontaux 42 du clip sont décollés du fond du bac. Le clip étant alors soulagé, il peut être rabattu contre le fond du bac. Cette position est illustrée par la figure 4. Dans cette position du clip, les tronçons 44 sont reçus dans les rainures 53 des blocs supports. Comme le montre la figure 7, les pneumatiques sont fortement appliqués contre le plancher et aucun jeu ne subsiste entre les différents éléments du dispositif de fixation. Un joint torique 80, fixé sur la face supérieure de l'élément de serrage 18, assure l'étanchéité au niveau de l'ouverture 26 du bac.

Une fois que le clip est rabattu contre le fond du bac, un espace se trouve dégagé dans le bac, dans lequel on peut ranger les différents éléments du dispositif de fixation ou une boîte à outils.

Afin d'assurer l'inviolabilité du verrouillage, l'élément support 16 ne doit pas pouvoir être dévissé de l'extérieur. Pour cela, on peut former sur la portion tubulaire filetée 34 de l'élément support au moins deux fentes 73 dans le sens axial. Lorsque la tige filetée du boulon 72 est vissée dans ladite portion filetée, elle tend à l'expanser à l'intérieur de l'élément support 16.

Une autre solution consiste à prévoir sur la face supérieure de l'élément support 16 un pion axial 77, lequel s'engage dans un trou 79 de la jante 30. Il va de soi que l'on peut à la fois prévoir les fentes 73 et le pion 77.

Pour démonter la roue de secours, on effectue les opérations précédentes en sens inverse : on dévisse le boulon 72 et on retire la plaquette 70, ce qui provoque un brusque redressement du clip sous le poids de la roue.

Il faut à présent serrer le clip pour lui permettre de passer à travers l'ouverture 26 du bac. Pour éviter de le faire avec les doigts, ce qui serait dangereux, on utilise selon l'invention un accessoire qui est intégré à la poignée. Cet accessoire comprend une ouverture allongée 81 qui débouche à l'extérieur par une fente 83. On fait passer le câble à travers la fente 83 et on adapte les bras 36, 38 du clip dans l'ouverture 81. On abaisse alors la poignée, ce qui a pour effet de resserrer les bras. Dès que les coudes 56, 58 du clip ont traversé le bord de l'ouverture 26 du bac, la roue de secours n'est plus retenue et elle tombe sous son propre poids.

Comme on l'a signalé précédemment, ce mode de réalisation présente un certain nombre d'inconvénients :
- les éléments du dispositif de fixation sont indépendants les uns des autres et ils risquent de s'égarer, surtout si on effectue un changement de roue dans un endroit obscur ;
- les doigts risquent d'être coincés par suite de la chute brutale de la roue.

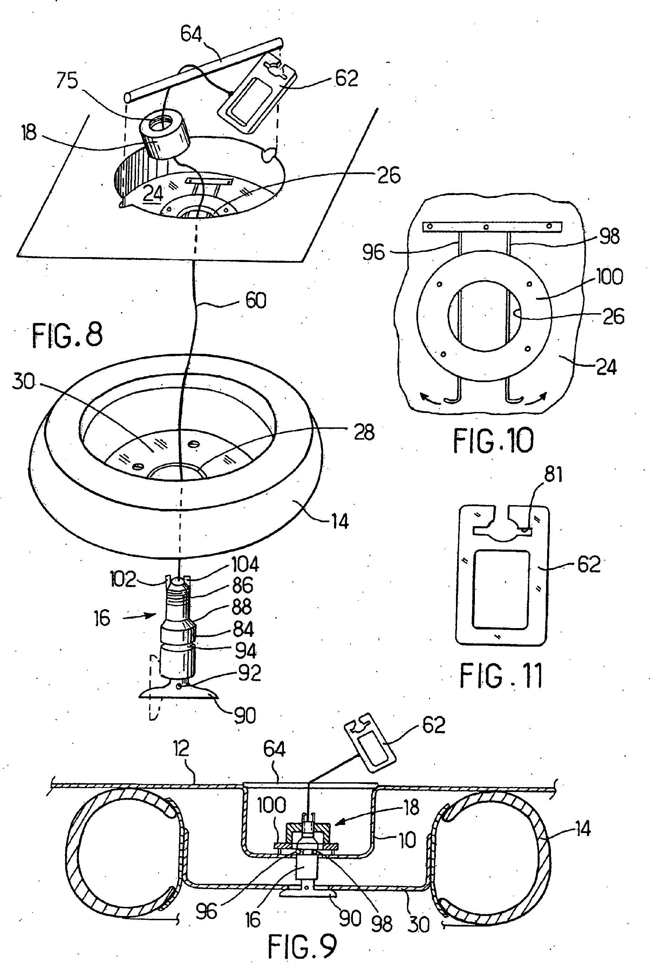

On décrira à présent en regard des figures 8 à 11 un second mode de réalisation de l'invention qui est exempt de ces inconvénients. Les éléments homologues de ceux du premier mode de réalisation seront désignés par les mêmes références numériques.

Dans ce mode de réalisation, l'élément de serrage 18 est constitué par une pièce tubulaire présentant un filetage 75 dans son alésage. L'élément de serrage est logé dans le bac et est dimensionné pour qu'il ne puisse pas sortir à travers l'ouverture 26 du bac.

L'élément support 16 comprend un corps cylindrique 84 pourvu à une extrémité d'une portion filetée 86. A l'autre extrémité du corps 84 est monté pivotant autour d'un axe 92 une pièce de retenue 90 qui peut être pivotée entre une position de stockage, représentée en traits tiretés sur la figure 8, où elle est repliée le long du corps et une position déployée représentée en trait plein, où elle est perpendiculaire à l'axe du corps cylindrique. Lorsque la pièce de retenue est dans sa position de stockage, l'élément support en entier peut passer à travers le trou de moyeu 28 de la roue de secours et à travers l'ouverture 26 du bac, et lorsqu'elle est dans sa position déployée, seul le corps cylindrique peut passer à travers le trou de moyeu et ladite ouverture.

La portion filetée 86 de l'élément support a un diamètre inférieur à celui du corps cylindrique et se raccorde à celui-ci par une portion tronconique 88.

A l'extrémité de la portion filetée 86 est fixée une extrémité du câble 60. Le câble est enfilé dans l'élément de serrage et est fixé par son autre extrémité sur la poignée de préhension. Celle-ci est également logée dans le bac et est dimensionnée pour qu'elle ne puisse pas sortir à travers l'ouverture 26 du bac.

Ce mode de réalisation également comporte des moyens de préverrouillage. Ceux-ci sont constitués par une gorge annulaire 94 formée sur le corps cylindrique 84 et par deux tiges élastiques 96, 98 montés sur le bac et destinés à s'encliqueter dans ladite gorge.

Les deux tiges métalliques élastiques 96, 98 sont fixées par une de leurs extrémités sur le fond 24 du bac. Ces tiges sont parallèles et sont séparées d'une distance sensiblement égale au diamètre du fond de la gorge 94. Elles s'étendent sur la surface du fond du bac symétriquement par rapport au centre de l'ouverture 26 et passent au-dessus de celle-ci près de son bord. Pour éviter que les tiges ne se tordent lors de la mise en place de l'élément support 16, elles sont maintenues en position horizontale au moyen d'une pièce en forme de couronne 100 qui est fixée sur le fond du bac autour de l'ouverture 26. Cette pièce n'est toutefois pas serrée sur les tiges, de manière à permettre leur libre flexion dans le plan du fond du bac, mais pas perpendiculairement à ce plan.

Comme le montre la figure 9, lorsque la roue de secours 14 est fixée sur le plancher du véhicule, la pièce de retenue 90 est appliquée contre la face extérieure de la jante 30, le corps cylindrique 84 passe à travers le trou du moyeu de la roue de secours et à travers l'ouverture du fond du bac, et sa portion filetée terminale fait saillie à l'intérieur du bac. Le roue est retenue dans cette position par l'élément de serrage 18 qui est vissé sur ladite portion filetée et par les tiges 96, 98 qui sont engagées dans la gorge 94 du corps cylindrique.

On notera que dans cet état, toute la longueur du câble se trouve à l'intérieur du bac. Pour éviter que le câble ne gêne les opérations de démontage de la roue de secours, il est avantageux de prévoir sur la poignée de traction 62 un enrouleur, non représenté, pouvant enrouler automatiquement toute la longueur du câble non utilisée.

Pour démonter la roue de secours on procède comme suit : la première opération consiste à dévisser l'élément de serrage 18. Pour cela, il est nécessaire d'empêcher l'élément support de tourner avec l'élément de serrage. Il est prévu à cet effet, à l'extrémité de la portion filetée 86 de l'élément support, deux ergots 102, 104 diamétralement opposés. On immobilise l'élément support en le tenant par ses ergots avec l'ouverture 81 prévue sur la poignée, et on dévisse l'élément de serrage à la main.

Après le dévissage de l'élément de serrage, la roue de secours est encore retenue par les tiges 96, 98. Dès que l'on écarte ces dernières pour les faire sortir de la gorge 94, la roue de secours tombe sur le sol sous l'action de son propre poids.

Ensuite, en inclinant la roue de secours sur le sol, on fait sortir légèrement l'élément support 16 afin de décoller la pièce de retenue 90 de la jante 30. La pièce de retenue est ensuite rabattue le long du corps cylindrique 84, ce qui permet de séparer la roue de secours de l'élément support. On notera que pendant toute l'opération de démontage, on n'a pas utilisé le câble de traction.

Du fait que la poignée de traction a des dimensions supérieures à celles de l'ouverture 26 du fond du bac, elle ne peut pas passer à travers cette ouverture. L'élément support, l'élément de serrage, le câble et sa poignée forment donc un ensemble indissociable lié au bac et qui ne peut pas être égaré.

Pour fixer la roue crevée sous le plancher du véhicule, on procède comme suit : on fait passer l'élément support 16 avec sa pièce de retenue 90 en position rabattue, à travers le trou de moyeu 28, depuis le creux de la jante. On déploie ensuite la pièce de retenue, puis on fait sortir le corps cylindrique 84 à travers le trou de moyeu et on amène la pièce de retenue 90 en appui contre la face extérieure de la jante 30 de la roue.

On installe ensuite la barre de renvoi de mouvement 64 et au moyen de la poignée de traction, on soulève la roue de secours. Lorsqu'elle est suspendue, celle-ci se centre d'elle-même sur l'axe de l'ouverture 26 du fond du bac. En remontant la roue, la portion tronconique 88 de l'élément support écarte les tiges 96, 98, lesquelles s'encliquettent ensuite dans la gorge 94. La roue de secours est alors préverrouillée et l'on peut relâcher la traction sur le câble. On visse ensuite l'élément de serrage 18 sur la portion filetée 86 de l'élément support. Toute la longueur de câble s'enroule dans l'enrouleur, de sorte que la poignée occupe le volume minimum. Au-dessus de l'élément de serrage et de la poignée, il reste un espace vide dans lequel on peut éventuellement ranger des accessoires ou une boîte à outils.

L'invention a donc permis de réaliser un dispositif de fixation d'une roue de secours sous le plancher d'un véhicule automobile, qui est simple à manier, économique et inviolable.

## Revendications

1. Dispositif de fixation de roue de secours sous le plancher d'un véhicule automobile selon l'invention, **caractérisé en ce qu**'il comprend :
- un bac (10) agencé dans le plancher (12) du véhicule et comportant en son fond (24) une ouverture centrale (26),
- des moyens supports (16, 18) de roue destinés à soutenir la roue de secours (14) par son centre, pendant son levage,
- des moyens de levage comprenant un câble (60) fixé par une extrémité sur lesdits moyens supports, et par l'autre extrémité à une poignée de traction (62),
- des moyens de préverrouillage (20 ; 94, 96, 98) destinés à maintenir provisoirement la roue de secours en position soulevée, avec sa jante (30) contre le fond du bac, sans le moyen du câble,
- et des moyens de verrouillage (72, 74 ; 18) pour verrouiller définitivement la roue de secours en position de fixation, où le pneumatique de la roue est appliqué contre la face extérieure du plancher (12).

2. Dispositif selon la revendication 1, **caractérisé en ce que** les moyens supports comprennent un élément support (16) et un élément de serrage (18) destinés à être placés respectivement du côté extérieur de la jante (30) de la roue et du côté du creux de la jante, en position centrée sur le trou de moyeu (28) de la roue et qui peuvent être assemblés l'un à l'autre par vissage en serrant entre eux le bord du trou de moyeu, le câble (60) étant fixé sur l'élément de serrage.

3. Dispositif selon la revendication 2, **caractérisé en ce que** ledit élément de serrage (18) comprend une tête (32) de diamètre supérieur à celui du trou de moyeu (28) et à celui de l'ouverture (26) du bas et une portion tubulaire (34) filetée intérieurement et extérieurement, de diamètre inférieur à celui du trou de moyeu, et **en ce que** l'élément de retenue (16) est constitué par un écrou qui se visse sur la partie filetée (34) de l'élément de serrage.

4. Dispositif selon l'une des revendications précédentes, **caractérisé en ce que** les moyens de préverrouillage sont constitués par un clip (20) monté pivotant sur l'élément de serrage (18), ledit clip ayant une forme normale dans laquelle sa largeur est supérieure au diamètre de l'ouverture (26) du fond du bac et une forme contractée dans laquelle sa largeur est inférieure au diamètre de ladite ouverture, ledit clip pouvant ainsi venir s'encliqueter sur le bord de ladite ouverture lorsque la roue de secours est appliquée contre le plancher du véhicule, empêchant ainsi la chute de la roue de secours, même si l'on n'exerce pas de traction sur le câble de levage.

5. Dispositif selon la revendication 4, **caractérisé en ce que** le clip (20) est constitué d'un fil métallique élastique plié en forme de triangle ouvert, comprenant deux bras (36, 38) reliés par un coude (40), lesdits bras se prolongeant par des portions en Z symétriques l'une de l'autre par rapport à la bissectrice de l'angle formé par lesdits côtés (36, 38), chaque portion en Z comprenant un premier tronçon (42) plié à angle aigu par rapport au côté adjacent (36 ou 38) et perpendiculaire à ladite bissectrice, un second tronçon (44) plié à 90° par rapport au deuxième tronçon dans le sens opposé au coude (40) et un troisième tronçon (46) plié à 90° par rapport au deuxième tronçon vers la bissectrice.

6. Dispositif selon l'une quelconque des revendications 4 et 5, **caractérisé en ce que** le clip (20) est monté pivotant dans deux blocs supports (48, 50) fixés sur la face supérieure de l'élément de serrage (18) en des positions diamétralement opposées.

7. Dispositif selon la revendication 6, **caractérisé en ce que** les blocs supports sont en forme de demi-cylindres et sont fixés sur l'élément de serrage par leur base rectangulaire, parallèlement entre eux, **en ce que** sur leurs faces extérieures est formée une rainure radiale (52) de section en V, parallèle à l'axe de l'élément de serrage, et **en ce que** dans le fond des rainures sont percés des trous traversants (54) dans lesquels lesdits troisièmes tronçons (46) sont insérés.

8. Dispositif selon l'une des revendications 6 et 7, **caractérisé en ce que** le clip (20) peut pivoter entre une position dressée dans laquelle les deuxièmes tronçons (44) remontent le long des rainures (52) sans s'appuyer sur le fond des rainures, tandis que des coudes (56, 58) formés respectivement par les côtés (36, 38) et les premiers tronçons (42) font saillie par rapport aux faces plates extérieures des blocs supports, et une position rabattue dans laquelle les parois des rainures (52) écartent lesdits seconds tronçons (44) de leur position normale.

9. Dispositif selon la revendication 8, **caractérisé en ce que** le clip est amené dans sa position dressée lorsqu'on veut le faire passer à travers l'ouverture (26) du fond du bac et est rabattu contre le fond du bac après que les coudes (56, 58) ont traversé l'ouverture (26) du fond du bac.

10. Dispositif selon la revendication 1, **caractérisé en ce que** lesdits moyens de verrouillage comprennent une plaquette rectangulaire (70) de longueur supérieure au diamètre de l'ouverture (26) du fond du bac, ladite plaquette étant disposée sur le fond du bac, selon un diamètre de ladite ouverture, de manière que ses extrémités reposent sur le bord de l'ouverture, ladite plaquette étant percée d'un trou (74) pour le passage d'un boulon (72) qui vient se visser dans un alésage intérieur (75) formé dans l'élément de serrage (18) et dans sa partie tubulaire filetée (73).

11. Dispositif selon l'une des revendications 3 et 10, **caractérisé en ce que** ladite portion tubulaire (34) de l'élément de serrage (18) est pourvue d'au moins deux fentes axiales (73), de manière que lorsque le boulon (72) est vissé dans ledit alésage (75), ladite portion tubulaire se dilate et se bloque dans ledit élément de retenue (16).

12. Dispositif selon la revendication 3, **caractérisé en ce que** ledit écrou (16) est muni d'un pion (77) qui est susceptible de pénétrer dans un trou (79) prévu sur la jante (30) de la roue de secours, afin d'empêcher le dévissage de l'écrou de l'extérieur.

13. Dispositif selon la revendication 1, **caractérisé en ce que** :
- les moyens supports comprennent un élément support (16) constitué d'un corps cylindrique (84) pourvu à une extrémité d'une portion filetée (86) et portant à son autre extrémité une pièce de retenue (90) montée pivotante entre une position de stockage où elle est repliée le long du corps, le corps et la pièce de retenue pouvant alors passer à travers le trou de moyeu de la roue de secours et une position déployée pour laquelle seul le corps cylindrique peut passer à travers le trou de moyeu (28), et un élément de serrage (18) constitué par un écrou dimensionné pour qu'il ne puisse pas sortir à travers l'ouverture (26) du fond du bac, et qui peut être assemblé, de l'intérieur du bac, sur la portion filetée (86) de l'élément support après que celui-ci a été passé à travers le trou de moyeu et l'ouverture du fond du bac,
- le câble (60) est enfilé dans ledit écrou (18) et ses extrémités sont fixées respectivement à l'extrémité filetée de l'élément support et à la poignée de traction (62),
- la poignée de traction se trouve dans le bac et est dimensionnée pour qu'elle ne puisse pas sortir à travers l'ouverture (26) du fond du bac, de sorte que la poignée de traction, le câble, l'élément de serrage et l'élément support ne peuvent être séparés du bac.

14. Dispositif selon l'une des revendications 1 et 13, **caractérisé en ce que** les moyens de préverrouillage sont constitués par la combinaison des caractéristiques suivantes :
- une gorge circulaire (94) est formée sur le corps cylindrique de l'élément support (16);
- ledit corps cylindrique a un diamètre supérieur à celui de la portion filetée et se raccorde à celle-ci par une portion tronconique (88),
- deux tiges parallèles (96, 98) sont fixées par une de leurs extrémités sur le fond (24) du bac, de manière à pouvoir être écartées élastiquement, lesdites tiges passant en travers de l'ouverture (26) du fond du bac, près du bord de cette ouverture et étant séparées par une distance égale au diamètre du fond de ladite gorge circulaire (94).

15. Dispositif selon la revendication 14, **caractérisé en ce que** les tiges (96, 98) sont maintenues dans le plan du fond du bac par une pièce en forme dé couronne (100) qui est fixée sur le fond du bac autour de l'ouverture (26), cette pièce permettant la libre flexion des tiges dans le plan du fond du bac, mais par perpendiculairement à ce plan.

16. Dispositif selon la revendication 13, **caractérisé en ce qu'**à l'extrémité de la portion filetée (86) de l'élément support sont formés deux ergots (102, 104) et **en ce que** la poignée de traction (62) présente une ouverture (81) susceptible de s'emboîter sur la portion filetée et sur les ergots, de manière à retenir l'élément support lorsqu'on dévisse l'élément de serrage.

17. Dispositif selon les revendications précédentes, **caractérisé en ce que** la poignée de traction (62) est munie d'un enrouleur qui enroule automatiquement la portion de câble libre.

18. Dispositif selon l'une des revendications précédentes, **caractérisé en ce que** l'élément de serrage, l'élément support, la poignée et le câble sont montés dans le bac, et **en ce que** dans l'espace restant au-dessus de ces accessoires est logée une boîte à outils.

19. Dispositif selon la revendication 1, **caractérisé en ce que** les moyens de levage comprennent également une barre de renvoi de mouvement (64) qui, en utilisation, est fixée de façon amovible ou fixe sur le bord du bac, selon une direction diamétrale, pour servir d'appui au câble pendant l'opération de levage.

20. Véhicule équipé d'un dispositif de fixation de roue de secours selon l'une des revendications précédentes.

## Claims

1. Device for fixing a spare wheel under the floor of a motor vehicle according to the invention, **characterized in that** it comprises:
- a well (10) arranged in the floor (12) of the vehicle and comprising at its bottom (24) a central opening (26),
- wheel support means (16, 18) designed to support the spare wheel (14) by its centre, during lifting thereof,
- lifting means comprising a cable (60) fixed by one end to said support means and by the other end to a pull handle (62),
- prelocking means (20; 94, 96, 98) designed to hold the spare wheel provisionally in the raised position, with its rim (30) against the bottom of the well, without using the cable,
- and locking means (72, 74; 18) for locking the spare wheel permanently in the fixed position, in which the tyre of the wheel is applied against the outer surface of the floor (12).

2. Device according to Claim 1, **characterized in that** the support means comprise a support element (16) and a clamping element (18) designed to be placed respectively on the outside of the rim (30) of the wheel and on the side of the rim cavity, in a centred position relative to the hub hole (28) of the wheel, and which may be screwed together, so clamping between them the edge of the hub hole, the cable (60) being fixed on the clamping element.

3. Device according to Claim 2, **characterized in that** said clamping element (18) comprises a head (32) of a diameter greater than that of the hub hole (28) and than that of the opening (26) in the well and an internally and externally threaded tubular portion (34) of a diameter smaller than that of the hub hole, and **in that** the retaining element (16) consists of a nut which screws onto the threaded part (34) of the clamping element.

4. Device according to one of the preceding claims, **characterized in that** the prelocking means consist of a clip (20) mounted pivotally on the clamping element (18), said clip having a normal form in which its width is greater than the diameter of the opening (26) in the bottom of the well and a contracted form in which its width is less than the diameter of said opening, said clip thus being able to snap onto the edge of said opening when the spare wheel is applied against the floor of the vehicle, so preventing the spare wheel from falling even if no traction is exerted on the lifting cable.

5. Device according to Claim 4, **characterized in that** the clip (20) consists of a resilient metal wire folded in the form of an open triangle, comprising two arms (36, 38) connected by a bend (40), said arms being extended by Z-shaped portions symmetrical with one another relative to the bisecting line of the angle formed by said sides (36, 38), each Z-shaped portion comprising a first section (42) folded at an acute angle relative to the adjacent side (36 or 38) and perpendicular to said bisecting line, a second section (44) folded at 90° relative to the second section away from the bend (40) and a third section (46) folded at 90° relative to the second section towards the bisecting line.

6. Device according to any one of Claims 4 and 5, **characterized in that** the clip (20) is mounted pivotally in two support blocks (48, 50) fixed on the upper face of the clamping element (18) in diametrically opposed positions.

7. Device according to Claim 6, **characterized in that** the support blocks take the form of half-cylinders and are fixed on the clamping element by their rectangular bases, parallel to one another, **in that** on their outer faces a radial groove (52) of V-shaped section is formed, parallel to the axis of the clamping element, and **in that** in the bottom of the grooves there are drilled through-holes (54) into which said third sections (46) are inserted.

8. Device according to one of Claims 6 and 7, **characterized in that** the clip (20) may pivot between an upright position in which the second sections (44) extend upwards along the grooves (52) without bearing against the bottoms of the grooves, whilst bends (56, 58) formed respectively by the sides (36, 38) and the first sections (42) project relative to the flat outer faces of the support blocks, and a folded-down position in which the walls of the grooves (52) deflect said second sections (44) from their normal position.

9. Device according to Claim 8, **characterized in that** the clip is brought into its upright position when it is desired to pass it through the opening (26) in the bottom of the well and is folded down against the bottom of the well once the bends (56, 58) have passed through the opening (26) in the bottom of the well.

10. Device according to Claim 1, **characterized in that** said locking means comprise a rectangular washer (70) of a length greater than the diameter of the opening (26) in the bottom of the well, said washer being disposed on the bottom of the well, along a diameter of said opening, such that its ends rest against the edge of the opening, said washer being pierced with a hole (74) for the passage of a bolt (72) which is screwed into an internal bore (75) formed in the clamping element (18) and in the threaded tubular part (73) thereof.

11. Device according to one of Claims 3 and 10, **characterized in that** said tubular portion (34) of the clamping element (18) is provided with at least two axial slots (73), such that when the bolt (72) is screwed into said bore (75), said tubular portion expands and becomes jammed in said retaining element (16).

12. Device according to Claim 3, **characterized in that** said nut (16) is provided with a pin (77) which is capable of entering a hole (79) provided on the rim (30) of the spare wheel, in order to prevent unscrewing of the nut from the outside.

13. Device according to Claim 1, **characterized in that**:
- the support means comprise a support element (16) consisting of a cylindrical body (84) provided at one end with a threaded portion (86) and bearing at its other end a retaining piece (90) mounted pivotally between a storage position where it is folded along the body, the body and the retaining piece then being capable of passing through the hub hole in the spare wheel, and an unfolded position in which only the cylindrical body may pass through the hub hole (28), and a clamping element (18) consisting of a nut so dimensioned that it cannot exit through the opening (26) in the bottom of the well, and which may be joined together inside the well with the threaded portion (86) of the support element after the latter has been passed through the hub hole and the opening in the bottom of the well,
- the cable (60) is threaded into said nut (18) and its ends are fixed respectively to the threaded end of the support element and to the pull handle (62),
- the pull handle is located in the well and is so dimensioned that it cannot exit through the opening (26) in the bottom of the well, such that the pull handle, the cable, the clamping element and the support element cannot be separated from the well.

14. Device according to one of Claims 1 and 13, **characterized in that** the prelocking means consist of the combination of the following features:
- a circular channel (94) is formed in the cylindrical body of the support element (16),
- said cylindrical body has a diameter greater than that of the threaded portion and is connected thereto by a frustoconical portion (88),
- two parallel rods (96, 98) are fixed by one of their ends to the bottom (24) of the well, so as to be able to be spread apart resiliently, said rods passing across the opening (26) in the bottom of the well, close to the edge of this opening, and being separated by a distance equal to the diameter of the bottom of said circular channel (94).

15. Device according to Claim 14, **characterized in that** the rods (96, 98) are held in the plane of the bottom of the well by a piece in the form of a collar (100) which is fixed to the bottom of the well around the opening (26), this piece allowing free flexion of the rods in the plane of the bottom of the well, but not perpendicularly to this plane.

16. Device according to Claim 13, **characterized in that** at the end of the threaded portion (86) of the support element there are formed two lugs (102, 104) and **in that** the pull handle (62) has an opening (81) capable of fitting together with the threaded portion and the lugs, so as to retain the support element when unscrewing the clamping element.

17. Device according to the preceding claims, **characterized in that** the pull handle (62) is equipped with a winder which automatically winds up the free portion of the cable.

18. Device according to one of the preceding claims, **characterized in that** the clamping element, the support element, the handle and the cable are mounted in the well, and **in that** a toolbox is accommodated in the space remaining above these accessories.

19. Device according to Claim 1, **characterized in that** the lifting means also comprise a movement transmission bar (64) which, when in use, is fixed in a detachable or fixed manner to the edge of the well, in a diametral direction, to serve as a support for the cable during the lifting operation.

20. Vehicle equipped with a spare wheel fixing device according to one of the preceding claims.

## Patentansprüche

1. Unterbodenbefestigung für ein Kraftfahrzeugersatzrad gemäß der Erfindung, **dadurch gekennzeichnet, dass** sie umfasst:
- einen Behälter (10), der im Boden (12) des Fahrzeugs vorgesehen ist und in seinem Boden (24) eine Mittelöffnung (26) umfasst,
- Stützmittel (16, 18) für das Rad, die dazu bestimmt sind, das Ersatzrad (14) während seines Hochhebens in seiner Mitte zu unterstützen,
- Hebemittel, umfassend ein Kabel (60), das an einem Ende an den Stützmitteln und an dem anderen Ende an einem Zuggriff (62) befestigt ist,
- Mittel zur Vorverriegelung (20; 94, 96, 98), die dazu bestimmt sind, das Ersatzrad vorübergehend in hochgehobener Position mit seiner Felge (30) am Boden des Behälters ohne das Mittel des Kabels zu halten,
- und Verriegelungsmittel (72, 74; 18), um das Ersatzrad endgültig in Befestigungsposition zu verriegeln, in der der Luftreifen des Rades an die Außenseite des Bodens (12) angelegt wird.

2. Vorrichtung nach Anspruch 1, **dadurch gekennzeichnet, dass** die Stützmittel ein Stützelement (16) und ein Klemmelement (18) umfassen, die dazu bestimmt sind, auf der Außenseite der Felge (30) des Rades bzw. auf der Seite des Hohlraums der Felge in mittiger Position auf dem Loch der Radnabe (28) des Rades befestigt zu werden, und die miteinander durch Schrauben verbunden werden können, wobei der Rand des Loches der Radnabe zwischen ihnen eingeklemmt wird, wobei das Kabel (60) auf dem Klemmelement befestigt wird.

3. Vorrichtung nach Anspruch 2, **dadurch gekennzeichnet, dass** das Klemmelement (18) einen Kopf (32) mit einem größeren Durchmesser als jener des Radnabenloches (28) und als jener der Öffnung (26) des Behälters und einen röhrenförmigen Abschnitt (34) mit einem Innen- und einem Außengewinde mit einem kleineren Durchmesser als jener des Radnabenloches umfasst, und dass das Halteelement (16) von einer Mutter gebildet ist, die auf den Gewindeteil (34) des Klemmelements geschraubt wird.

4. Vorrichtung nach einem der vorhergehenden Ansprüche, **dadurch gekennzeichnet, dass** die Mittel zur Vorverriegelung von einem Clip (20) gebildet sind, der schwenkbar auf dem Klemmelement (18) montiert ist, wobei der Clip eine normale Form, bei der seine Breite größer als der Durchmesser der Öffnung (26) des Bodens des Behälters ist, und eine schmale Form aufweist, bei der seine Breite geringer als der Durchmesser der Öffnung ist, wobei der Clip somit am Rand der Öffnung einrasten kann, wenn das Ersatzrad an den Boden des Fahrzeugs angelegt wird, wobei das Herunterfallen des Ersatzrades verhindert wird, auch wenn kein Zug auf das Hebekabel ausgeübt wird.

5. Vorrichtung nach Anspruch 4, **dadurch gekennzeichnet, dass** der Clip (20) von einem elastischen Metalldraht gebildet ist, der in form eines offenen Dreiecks gebogen ist, umfassend zwei Arme (36, 38), die durch ein Kniestück (40) verbunden sind, wobei sich die Arme durch Z-förmige zueinander und zur Winkelhalbierenden des von den Seiten (36, 38) jedes Z-förmigen Abschnitts gebildeten Winkels symmetrische Abschnitte verlängern, jeder Abschnitt umfassend einen ersten Abschnitt (42), der in einem spitzen Winkel in Bezug auf die angrenzende Seite (36 oder 38) und senkrecht auf die Winkelhalbierende gebogen ist, einen zweiten Abschnitt (44), der um 90° in Bezug auf den zweiten Abschnitt in die zu dem Kniestück (40) entgegen gesetzte Richtung gebogen ist, und einen dritten Abschnitt (46), der um 90° in Bezug auf den zweiten Abschnitt zur Winkelhalbierenden gebogen ist.

6. Vorrichtung nach einem der Ansprüche 4 und 5, **dadurch gekennzeichnet, dass** der Clip (20) schwenkbar in zwei Stützblöcken (48, 50) montiert ist, die auf der Oberseite des Klemmelements (18) in diametral entgegen gesetzten Positionen befestigt sind.

7. Vorrichtung nach Anspruch 6, **dadurch gekennzeichnet, dass** die Stützblöcke in halbzylindrischer Form vorhanden und auf dem Klemmelement mit ihrer rechteckigen Basis parallel zueinander befestigt sind, dass auf ihren Außenflächen eine Radialnut (52) mit V-förmigem Querschnitt parallel zur Achse des Klemmelements ausgebildet ist, und dass in den Boden der Nuten Durchgangslöcher (54) gebohrt sind, in die die dritten Abschnitte (46) eingesetzt sind.

8. Vorrichtung nach einem der Ansprüche 6 und 7, **dadurch gekennzeichnet, dass** der Clip (20) zwischen einer aufgerichteten Position, in der die zweiten Abschnitte (44) entlang der Nuten (52) aufragen, ohne sich am Boden der Nuten abzustützen, während Kniestücke (56, 58), die jeweils von den Seiten (36, 38) und den ersten Abschnitten (42) gebildet sind, in Bezug auf die flachen Außenseiten der Stützblöcke vorspringen, und einer umgelegten Position, in der die Wände der Nuten (52) die zweiten Abschnitte (44) von ihrer normalen Position entfernen, schwenken kann.

9. Vorrichtung nach Anspruch 8, **dadurch gekennzeichnet, dass** der Clip in seine aufgerichtete Position gebracht wird, wenn er durch die Öffnung (26) des Bodens des Behälters durchgeführt werden soll, und gegen den Boden des Behälters umgelegt wird, nachdem die Kniestücke (56, 58) durch die Öffnung (26) des Bodens des Behälters durchgeführt wurden.

10. Vorrichtung nach Anspruch 1, **dadurch gekennzeichnet, dass** die Verriegelungsmittel eine rechteckige Platte (70) mit einer größeren Länge als der Durchmesser der Öffnung (26) des Bodens des Behälters umfassen, wobei die Platte auf dem Boden des Behälters entlang eines Durchmessers der Öffnung angeordnet ist, so dass ihre Enden auf dem Rand der Öffnung liegen, wobei die Platte mit einem Loch (74) für den Durchgang eines Bolzens (72) versehen ist, der in eine Innenbohrung (75) geschraubt wird, die in dem Klemmelement (18) und in seinem röhrenförmigen Gewindeteil (73) ausgebildet ist.

11. Vorrichtung nach einem der Ansprüche 3 und 10, **dadurch gekennzeichnet, dass** der röhrenförmige Abschnitt (34) des Klemmelements (18) mit mindestens zwei axialen Schlitzen (73) versehen ist, damit wenn der Bolzen (72) in die Bohrung (75) geschraubt ist, sich der röhrenförmige Abschnitt aufdehnt und in dem Halteelement (16) blockiert wird.

12. Vorrichtung nach Anspruch 3, **dadurch gekennzeichnet, dass** die Mutter (16) mit einem Stift (77) versehen ist, der in ein Loch (79) eindringen kann, das auf der Felge (30) des Ersatzrades vorgesehen ist, um das Lösen der Mutter von außen zu verhindern.

13. Vorrichtung nach Anspruch 1, **dadurch gekennzeichnet, dass**:
- die Stützmittel ein Stützelement (16), das von einem zylindrischen Körper (84) gebildet ist, der an einem Ende mit einem Gewindeabschnitt (86) versehen ist und an seinem anderen Ende ein Haltestück (90) trägt, das schwenkbar zwischen einer Lagerungsposition, in der es entlang des Körpers umgelegt ist, wobei nun der Körper und das Haltestück durch das Radnabenloch des Ersatzrades hindurchgehen können, und einer ausgefahrenen Position angeordnet ist, in der nur der zylindrische Körper durch das Radnabenloch (28) hindurchgehen kann, und ein Klemmelement (18) umfassen, das von einer Mutter gebildet ist, die derart dimensioniert ist, dass sie nicht durch die Öffnung (26) des Bodens des Behälters austreten kann, und die im Inneren des Behälters auf dem Gewindeabschnitt (86) des Stützelements befestigt werden kann, nachdem dieses durch das Radnabenloch und die Öffnung des Bodens des Behälters durchgeführt wurde,
- das Kabel (60) durch die Mutter (18) geführt und seine Enden am Gewindeende des Stützelements bzw. am Zuggriff (62) befestigt werden,
- sich der zuggriff in dem Behälter befindet und derart dimensioniert ist, dass er nicht durch die Öffnung (26) des Bodens des Behälters austreten kann, so dass der zuggriff, das Kabel, das Klemmelement und das Stützelement nicht vom Behälter getrennt werden können.

14. Vorrichtung nach einem der Ansprüche 1 und 13, **dadurch gekennzeichnet, dass** die Mittel zur Vorverriegelung durch die Kombination der folgenden Merkmale gebildet sind:
- eine kreisförmige Rille (94) ist auf dem zylindrischen Körper des Stützelements (16) ausgebildet;
- der zylindrische Körper hat einen größeren Durchmesser als jener des Gewindeabschnitts und schließt sich an diesen durch einen kegelstumpfartigen Abschnitt (88) an;
- zwei parallele Stangen (96, 98) sind mit einem ihrer Enden am Boden (24) des Behälters befestigt, um elastisch voneinander entfernt zu werden, wobei diese Stangen durch die Öffnung (26) des Bodens des Behälters in der Nähe des Randes dieser Öffnung verlaufen und durch einen Abstand gleich dem Durchmesser des Bodens der kreisförmigen Rille (94) getrennt sind.

15. Vorrichtung nach Anspruch 14, **dadurch gekennzeichnet, dass** die Stangen (96, 98) in der Ebene des Bodens des Behälters durch ein Stück (100) in Form eines Kranzes gehalten werden, das auf dem Boden des Behälters um die Öffnung (26) befestigt ist, wobei dieses Stück die freie Biegung der Stangen in der Ebene des Bodens des Behälters, aber nicht senkrecht zu dieser Ebene, ermöglicht.

16. Vorrichtung nach Anspruch 13, **dadurch gekennzeichnet, dass** am Ende des Gewindeabschnitts (86) des Stützelements zwei Haken (102, 104) ausgebildet sind, und dass der Zuggriff (62) eine Öffnung (81) aufweist, die sich auf den Gewindeabschnitt und auf die Haken aufsetzen kann, um das Stützelement zu halten, wenn das Klemmelement losgeschraubt wird.

17. Vorrichtung nach den vorhergehenden Ansprüchen, **dadurch gekennzeichnet, dass** der Zuggriff (62) mit einem Aufwickler versehen ist, der den freien Kabelabschnitt automatisch aufwickelt.

18. Vorrichtung nach einem der vorhergehenden Ansprüche, **dadurch gekennzeichnet, dass** das Klemmelement, das Stützelement, der Griff und das Kabel in dem Behälter montiert sind, und dass in dem übrigen Raum über diesen Zubehörteilen ein Werkzeugkasten angeordnet ist.

19. Vorrichtung nach Anspruch 1, **dadurch gekennzeichnet, dass** die Hebemittel auch eine Stange (64) zur Bewegungsumkehr umfassen, die während der Verwendung abnehmbar oder fest am Rand des Behälters entlang einer Diametralrichtung befestigt ist, um als Stütze für das Kabel während des Hebevorgangs zu dienen.

20. Fahrzeug, das mit einer Ersatzradbefestigung nach einem der vorhergehenden Ansprüche ausgestattet ist.
